# EUROPÄISCHE PATENTSCHRIFT

(11) **EP 1 019 188 B1**
(45) Veröffentlichungstag und Bekanntmachung des Hinweises auf die Patenterteilung: **13.07.2005**
(21) Anmeldenummer: 98951428.6
(22) Anmeldetag: 17.09.1998
(51) Int. Cl.: B01J 20/32, G01N 30/48

(54) **CHEMISCH-MODIFIZIERTE, PORÖSE MATERIALIEN MIT ELEKTRONEUTRALER, HYDROPHILER AUSSENOBERFLÄCHE**
CHEMICALLY-MODIFIED POROUS MATERIALS WITH AN ELECTRONEUTRAL HYDROPHILIC OUTER SURFACE
MATERIAUX POREUX A SURFACE EXTERIEURE HYDROPHILE ELECTRONEUTRE MODIFIES CHIMIQUEMENT

(30) Priorität: 29.09.1997 DE 19742853
(43) Veröffentlichungstag der Anmeldung: 19.07.2000
(73) Patentinhaber: MERCK PATENT GmbH, 64293 Darmstadt (DE)
(72) Erfinder: BOOS, Karl-Siegfried, D-82131 Gauting (DE); APEL, Christoph, D-65207 Wiesbaden (DE); SEIDEL, Dietrich, D-82340 Feldafing (DE); UNGER, Klaus, K., D-64342 Seeheim-Jugenheim (DE); LUBDA, Dieter, D-64625 Bensheim (DE); WIELAND, Gerhard, D-64625 Bensheim (DE)
(86) Internationale Anmeldenummer: PCT/EP1998/005925
(87) Internationale Veröffentlichungsnummer: WO 1999/016545

(56) Entgegenhaltungen:
- EP-A- 0 228 090
- EP-A- 0 537 461
- WO-A-94/09063

## Beschreibung

Die Erfindung betrifft biokompatible, poröse Materialien, deren Porenflächen chemisch modifiziert sind, sowie die Herstellung dieser Materialien.

Die äußere Oberfläche der porösen Materialien ist elektroneutral und hydrophil, während die Oberflache der Poren mit unterschiedlichen, funktionellen Liganden modifiziert werden kann.

Poröse Materialien, wie beispielsweise chromatographische Sorbentien, Hohlfasern und Membranen, werden in großem Umfang und in vielfältiger Weise zur Analyse, Aufreinigung und Abtrennung von Komponenten aus komplexen biologischen Flüssigkeiten - wie beispielsweise Blut, Plasma, Fermenterbrühe, Überständen von Zellkultur oder Gewebehomogenisaten verwendet. Dazu gehört auch die extrakorporale Reinigung von Blut,
wobei beispielsweise toxische oder pathogene Blutbestandteile entfernt werden.

Die Selektivität dieser Materialien beruht primär auf einem Größenausschlußmechanismus, der durch einen entsprechenden Porendurchmesser vorgegeben ist. Eine breite Verwendung finden jedoch auch poröse Materialien, deren Oberfläche zusätzlich mit funktionellen Liganden (z.B. Separationseffektoren, die eine Verteilungsphase bilden) modifiziert ist. Beispiele hierfur sind chromatographische Trägermateriaien und Membranen mit lonenaustausch- oder Umkehrphasen-Eigenschaften. Werden als funktionelle Liganden Katalysatoren oder Biokatalysatoren (z.B. Enzyme oder Ribozyme) immobilisiert, so werden katalytisch wirksame poröse Materialien bereitgestellt, die es beispielsweise erlauben, toxische Bestandteile abzubauen oder zu detoxifizieren.

Beim Kontakt poröser Materialien, deren Oberfläche mit funktionellen Liganden wie z.B. mit Separationseffektoren, wie lonenaustausch- oder hydrophobe Alkylgruppen, modifiziert ist, kommt es zusätzlich zu einer unspezifischen Adsorption und/oder Denaturierung von zellulären Bestandteilen, Proteinen und/oder Nukleinsäuren an der für diese makromolekularen Komponenten frei zugänglichen Außenoberfläche (Kontaktfläche) von porosen Materialien.

Dies führt zu einem unerwünschten Kapazitäts- und Selektivitätsverlust sowie zu einem irreversiblen Druckanstieg bei Verwendung derartiger Materialien in gepackten Trennsaulen oder als Membranen in Filtrationseinheiten.

Diese Bioinkompatibilität besitzt eine noch weitaus größere Bedeutung bei der Verwendung von porösen Materialien für medizinische, diagnostische und klinisch-therapeutische Zwecke. So dürfen beispielsweise akute oder chronische Therapieverfahren unter Verwendung poröser Materialien [W. Samtleben, T. Bosch, B. Schmidt, H.J Gurland, Int. J. Artif. Organs, 12 (1989), 61-65] keine immunogenen Reaktionen hervorrufen, und es darf zu keiner oberflächen-vermittelten Kontaktaktivierung der Gerinnungskaskade und des Komplement-Systems führen. Eine Übersicht bezüglich der Bio- und Hämokompatibilität von porösen Materialien für therapeutische Zwecke geben H. Klinkmann und D. Falkenhagen [Adv. Med. Biol. 260 (1989), 39-52].

Die aufgeführten Beispiele zeigen, daß es an porösen Materialien fehlt, die einerseits mit funktionellen Liganden (z.B. Verteilungsphasen) modifiziert sind, um dadurch eine selektive Absorption bzw. Bindung von Zielkomponenten zu erreichen, die aber andererseits eine biokompatible Außenoberfläche besitzen, welche eine unerwünschte Adsorption und/oder Denaturierung bzw. Aktivierung von bzw. durch Komponenten biologischer Flüssigkeiten ausschließt.

Der Erfindung lag daher die Aufgabe zugrunde, poröse Materialien, deren Porenflächen mit funktionellen Liganden besetzt sind, und deren Außenflächen elektroneutrale hydrophile Eigenschaften aufweisen, und Verfahren zur Herstellung dieser Materialien bereitzustellen.

Eine biokompatible Außenoberflache sollte (bio)chemisch inert, elektroneutral und mit wäßrigen Medien benetzbar (hydrophil) sein. Die Innenflächen der Poren sollten hingegen mit verschiedenen funktionellen Liganden modifiziert sein. Diol-modifizierte Träger haben sich als hydrophile Materialien erwiesen, die (bio)chemisch innert sind. Als chemische Modifikation der Außenoberfläche von porösen Materialien wurden daher reaktive Gruppen gewählt, die mit Hilfe eines partikulären Katalysators zu vicinalen Diol-Gruppen oder zu anderen hydrophilen Gruppen umgesetzt werden können.

In DE 41 30 475 A1 und von J. Haginaka et al. [Anal. Chem. 61 (1989), 2445-2448] werden chemisch-enzymatische Verfahren zur Herstellung von porösen Adsorbentien beschrieben, die eine Diol-modifizierte Oberfläche der größeren Poren (und der Außenflächen der Partikel) aufweisen und bei denen die kleineren Poren hydrophob derivatisiert sind. Jedoch sind nach den in diesen Dokumenten offenbarten Verfahren nur Materialien zugänglich, die hydophobe Poreninnenflächen aufweisen; im übrigen werden Materialien ausschließlich für analytische, chromatographische Zwecke offenbart. Ein weiterer Nachteil dieser Verfahren ist die Verwendung von Enzymen verbunden mit deren eingeschränkter Substratspezifität und Größe, die Mehrschritt-Synthese und aufwendige Aufreinigungsschritte.

Von Kimata et al. [J. Chromatogr. 515 (1990), 73-84] wird ein Syntheseweg offenbart, der auf einer partiellen, säurekatalysierten Hydrolyse eines alkylsylilierten Kieselgels basiert. Durch die Einwirkung konzentrierter Salzsäure auf ein handelsübliches Umkehrphasen(RP)-Kieselgel werden - nach Angabe der Autoren - bevorzugt die auf der Außenoberfläche befindlichen Alkylreste unter Generierung der ursprünglich vorhandenen Silanolgruppen hydrolysiert. Letztere werden anschließend mit einem 3-Glycidoxypropyl-silan umgesetzt und die Epoxidgruppen zu Diolgruppen hydrolysiert. Somit entsteht eine diolsubstituierte Außenoberfläche. Dieses rein chemische Mehrstufen-Verfahren besitzt jedoch den Nachteil, daß die Hydrolyse auf silanisierte Kieselgele beschränkt ist, schwer kontrollierbar und reproduzierbar ist und darüberhinaus die Porenstruktur verändert wird.

WO 94/09 063 offenbart ein Verfahren bei dem im Ergebnis ähnlich wie in DE 41 30 475 die Innenflächen von größeren Poren hydrophil modifiziert wird, während die Innenflachen von kleineren Poren durch Umsetzung von Epoxidgruppen hydrophob modifiziert werden. Das offenbarte Verfahren erzeugt folglich ein poröses Material, bei dem Poren mit unterschiedlicher Porenweite in unterschiedlicher Weise modifiziert sind. Die Differenzierung zwischen den Porengrößen erfolgt durch die Verwendung eines polymeren hochmolekularen Sulfonsäurederivates als Katalysator. Da sowohl die Porenweite der Partikel als auch die Molekülgröße des polymeren Katalysators herstellungsbedingt eine deutliche Streubreite aufweisen, kommt es durch Überlappung der Verteilungskurven zu unerwünschten Umsetzungen. So ist es beispielsweise nach dem in WO 94/09 063 offenbarten Verfahren nicht ohne weiteres möglich, nur die Außenflächen der Partikel hydrophil zu derivatisieren.

Der Erfindung lag daher insbesondere die Aufgabe zugrunde, ein Verfahren bereitzustellen, das es erlaubt, auf einfache und reproduzierbare Weise die erwünschte biokompatible Außenfläche poröser Materialien zu generieren und zwar unabhängig von der chemischen Natur des Basismaterials, und das es außerdem erlaubt, einheitlich modifizierte Poreninnenflächen zur Verfügung zu stellen, wobei ausschließlich die Außenflächen der porösen Materialien hydrophil modifiziert sind. Vorteilhaft wäre es, wenn entsprechend dem Verwendungszweck der porösen Materialien verschiedene funktionelle Liganden die Poreninnenflächen eingebaut werden könnten.

Die in WO 94/09 063 verwendeten polymeren Katalysatoren liegen solvatisiert in Lösung vor. Überraschend wurde gefunden, daß durch Einsatz von partikulären Katalysatoren gezielt die Außenflächen von porösen Matenalien umgesetzt werden können. Dabei muß der Partikeldurchmesser der Katalysatoren deutlich größer sein als die Porenweite des porösen Materials.

Gegenstand der Erfindung sind poröse Materialien, die hydrophile Außenflächen, sowie Porenflächen, die mit funktionellen Liganden besetzt sind, aufweisen, und die erhältlich sind durch folgende Reaktionsschritte:
a) Einführung von Epoxid-Gruppen in einen porösen Basisträger, wobei die Porenflächen und die Außenflächen des Basisträgers modifiziert werden, soweit der Basisträger keine Epoxid-Gruppen aufweist,
b) katalytische Ringöffnung der Epoxid-Gruppen durch Reaktion mit einem Nucleophil unter Anwendung eines partikulären Katalysators in salzfreiem Wasser oder in 10% Isopropanol (v:v), wobei die Partikelgröße des Katalysators größer als der mittlere Porendurchmesser des porösen Basisträgers ist, und so ausgewählt ist, dass die Verteilungskurve der Partikelgröße des partikulären Katalysators und die Verteilungskurve der Porendurchmesser des porösen Basisträgers sich um weniger als 10 Prozent überlappen;
c) Umsetzung der in Schritt b) verbliebenen Epoxid-Gruppen der Porenflächen und Einführung von Separationseffektoren, wobei Phosphorsäure, Ammoniak, Diethylamin, Trimethylamin, schweflige Säure, Aminoäthansulfonsaure, m-Aminosulfonboronsäure oder auch Komplexbildner wie Iminodiessigsäure, an die genannten Epoxidgruppen addiert werden.

Gegenstand der Erfindung sind ferner Verfahren zur Herstellung dieser porösen Materialien, sowie ihrer Verwendung.

Poröse Basisträger, die geeignet sind fur die Ausführung der vorliegenden Erfindung, sind in großer Zahl bekannt und auch kommerziell erhältlich. Dazu gehören sowohl partikuläre als auch nicht-partikuläre Basisträger. Nicht-partikuläre Basisträger sind beispielsweise Membranen, wie z.B. Flachmembranen oder Hohlfasermembranen, oder Gewebe. Geeignete poröse Basisträger können sowohl aus anorganischen Materialien, z.B. oxidischen Materialien wie porösem Glas (CPC) oder SiO₂, oder aus organischen Materialien, z.B. vernetzten Polymeren wie Mischpolymerisaten aus Glycidylmethacrylat und Ethylendimethacrylat oder aus Dihydroxypropylmethacrylat und Ethylendimethacrylat, bestehen. Derartige Basisträger können bereits Epoxid-Gruppen enthalten, wie es bei dem genannten Mischpolymerisat aus Glycidylmethacrylat und Ethylendimethacrylat der Fall ist. Es ist aber ebenfalls möglich, Epoxid-Gruppen nach dem Fachmann bekannten Reaktionen in einen porösen Basisträger einzuführen, z.B. durch Silanisierung eines porösen Basisträgers mit einem 3-Glycidoxypropyl-silan, oder durch Umsetzung eines Mischpolymerisates aus Dihydroxypropylmethacrylat und Ethylendimethacrylat mit Epichlorhydrin.

Nucleophile Agentien, die geeignet sind, mit den Epoxid-Gruppen zu reagieren und dabei hydrophile Gruppen einführen sind dem Fachmann bekannt. Dazu gehören Wasser, ein- oder mehrwertige Alkohole, wobei eine Hydroxylgruppe durch eine Amino- oder Thiolgruppe ersetzt sein kann, wie beispielsweise Ethylenglykol, Glycerin, Pentaerythrit, 2-Aminoethanol, 2-Amino-1,3-propandiol, Tris-(hydroxymethyl)-methylamin (TRIS) oder 4-Amino-4-(3-hydroxypropyl)-1,7-heptandiol. Weitere geeignete nucleophile Agentien sind hydrophile heterocyclische Derivate, wie beispielsweise 3-Amino-1-hydroxy-2-pyrrolidon.

Die erfindungsgemäß verwendeten partikulären Katalysatoren sind dadurch gekennzeichnet, daß sie aus einem (wasserunlöslichen) porösen oder unporösen Träger bestehen, dessen Oberfläche mit lonenaustausch-Liganden modifiziert ist. Als Katalysatorträger können silikathaltige Materialien wie beispielsweise Kieselgele oder Gläser benutzt werden. Ebenfalls geeignet sind vernetzte natürliche oder synthetische Polymere oder Copolymere wie beispielsweise vernetzte Styrol-Divinylbenzol-Copolymere oder Partikel aus Polysacchariden wie vernetzte Cellulose oder Agarose. Besonders geeignet sind auch zusammengesetzte Katalysatorträger, die magnetisierbare Zusätze enthalten. Geeignete Matenalien sind in großer Zahl kommerziell erhältlich. Die Katalysatorträger können - sofern die lonenaustauschgruppen nicht bereits im Ausgangsmaterial vorhanden sind - nach bekannten Methoden zu geeigneten Ionenaustauschern umgesetzt werden. Als lonenaustauschergruppen können solche mit schwach oder stark sauren Eigenschaften, wie beispielsweise Carbonsäure- oder Sulfonsäuregruppen, oder solche mit schwach oder stark basischen Eigenschaften, wie beispielsweise Diethylaminoethyl (DEAE)- oder Diethyl-(2-hydroxypropyl)aminoethyl (QAE)-Gruppen verwendet werden, wobei die Kationenaustauscher in der H⁺-Form und die Anionenaustauscher in der OH⁻-Form vorliegen müssen.

Magnetische Katalysatorpartikel können durch Anwendung eines Magnetfeldes auf einfache Art aus dem Reaktionsansatz abgetrennt werden.

Der mittlere Porendurchmesser des porösen Basisträgers, sowie dessen Porengrößenverteilung bestimmen die Teilchengröße des erfindungsgemäß verwendeten partikulären Katalysators. Damit die Katalysatorpartikel nicht in die Poren des Basisträgers eindringen können, muß deren Partikeldurchmesser ausreichend groß sein: dazu muß der (kleinste) Durchmesser des verwendeten partikulären Katalysators größer als der (mittlere) Porendurchmesser des porösen Basisträgers sein. Das bedeutet, daß sich die Verteilungskurven des Porendurchmessers des porösen Basisträgers und der Partikelgröße des partikulären Katalysators nicht oder nur geringfügig überlappen dürfen. Für praktische Anwendungen ist diese Bedingung erfüllt, wenn der Überlappungsbereich beider Verteilungskurven weniger als 10 Prozent, insbesonders weniger als 5 Prozent, der jeweils auf 100 Prozent normierten Verteilungskurven beträgt.

Wenn die genannten Randbedingungen für die Größenverhältnisse zwischen Poren des porösen Basisträgers und der Partikelgröße des partikulären Katalysators eingehalten werden, werden bei Anwendung des erfindungsgemäßen Verfahrens poröse Materialien erhalten, deren Außenfläche hydrophil modifiziert sind, und deren Poreninnenflächen einheitlich mit einem funktionellen Liganden modifiziert sind.

Die Umsetzung der Epoxid-Gruppen auf der Außenoberfläche der porösen Basisträger durch einen erfindungsgemäßen partikulären Katalysator erfolgt in salzfreiem (bidestillierten) Wasser oder in (10 %, v/v) Isopropanol.

Die Poreninnenflächen der erfindungsgemäßen porösen Materialien werden mit funktionellen Liganden belegt. Unter funktionellen Liganden werden Separationseffektoren verstanden.

Separationseffektoren erzeugen spezifische Wechselwirkungen, die für chromatographische Trennungen oder anderen Verteilungsverfahren, wie der Flüssig-Flüssig-Verteilung, verwendet werden können.

Die Epoxid-Gruppen in den Poren können weiter umgesetzt werden und Separationseffektoren eingeführt werden, wodurch Ionenaustauscher, thiophile Sorbentien oder Sorbentien für die Metallchelat- oder die hydrophobe Chromatographie und die Affinitätschromatographie, sowie auch für chirale Trennungen bereitgestellt werden. Dabei werden Phosphorsäure, Ammoniak, Diethylamin, Trimethylamin, schweflige Säure oder auch Komplexbildner wie Immodiessigsaure, an den Oxiranring addiert.

Beispiele für Umsetzungen von Oxirangruppen sind:
a) Die Herstellung von thiophilen Sorbentien und von Sorbentien für die Metallchelatchromatographie ist, ebenso wie die Herstellung von Affinitätsträgern in DE 43 10 964 (EP 0 565 978) offenbart.
b) In DE 43 33 674 (WO 95/09 694) und in DE 43 33 821 (WO95/09 695) sind Umsetzungen offenbart, mit derer Hilfe Ionenaustauscher bereitgestellt werden können.
c) In DE 43 23 913 (WO 95/02 820) werden Sorbentien für die hydrophobe Interaktionschromatographie beschrieben.

Einzelheiten der Herstellung der verschiedenen Sorbentien und deren Verwendung können den oben genannten Druckschriften entnommen werden; die diesbezugliche Offenbarung dieser Druckschriften ist durch Bezugnahme in die vorliegende Anmeldung eingeführt.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Herstellungsbeispiele

Die folgenden Beispiele sollen die Erfindung näher erläutern und stellen keine Einschränkung des Erfindungsgedankens dar. In den folgenden Beispielen bedeutet Raumtemperatur 15 - 25 °C. Reaktionsprodukte werden durch Filtration auf einer Glasfilternutsche (GF 2) isoliert und gewaschen.

### Beispiel 1: Einführung von reaktiven Oxirangruppen in einen hydroxylgruppenhaltigen Basisträger

1 Gewichtsanteil (Trockengewicht) des porösen, organischen Copolymer-Träger TSK HW 40 C (Fa. Merck KGaA: Partikeldurchmesser: ca. 30 - 60 µm; Porendurchmesser ca. 6 nm) wird in 4 Gewichtsanteilen bidestilliertem Wasser suspendiert und mit 1,1 Gewichtsanteilen 1-Chlor-2,3-epoxypropan versetzt. Die Epoxidierung läuft unter Rühren bei 45 °C über 4 Stunden bei konstantem pH-Wert (9,0) ab. Das epoxidierte Gel wird abgenutscht und nacheinander mit 4 Gewichtsanteilen bidestilliertem Wasser, 4 Gewichtsanteilen Methanol und 4 Gewichtsanteilen bidestilliertem Wasser salzfrei gewaschen und bei 40 - 50 °C im Vakuum getrocknet.

### Beispiel 2: Umsetzung der reaktiven Oxirangruppen auf der Außenoberfläche des porösen Trägermaterials

1 Gewichtsanteil (Trockengewicht) des epoxidierten Copolymer-Trägers aus Beispiel 1 werden in 15 Gewichtsanteilen bidest. Wasser aufgeschlämmt und mit 1 Gewichtsanteil einer 2,5gewichtsprozentigen wäßrigen Suspension des erfindungsgemäßen partikulären Katalysators (sulfonierte, unporöse Latex-Microspheres; Partikeldurchmesser: 1 µm; Polybead® Sulfate, Polysciences, Inc., Warrington, PA, USA) versetzt und 20 Stunden bei RT gerührt.

Vor seiner Verwendung wird der partikuläre Katalysator mit 0,1 N Salzsäure in die entsprechende H^{⊕}-Form überführt. Anschließend wird das Reagenz mit bidest. Wasser salzfrei gewaschen Die Wiedergewinnung des partikulären Katalysators nach der Konditionierung bzw. vor und nach den Waschschritten erfolgt durch Zentrifugation oder Filtration.

Nach erfolgter Umsetzung wird der verwendete partikuläre Katalysator vom modifizierten Trägermaterial durch Filtration abgetrennt, wobei ein Filter entsprechender Porosität verwendet wird. Im vorliegenden Beispiel ist dies eine gesinterte Glasfritte der Porosität 2. Der so wiedergewonnene partikuläre Katalysator kann nach Konditionierung und anschließendem Waschen mit bidest. Wasser erneut verwendet werden.

Die Quantifizierung der durch das Festphasen-Reagenz hydrolysierten Epoxidgruppen erfolgt anhand der dem Fachmann bekannten Titration mit Na-thiosulfat und ergab 20 µmol/g Trockengewicht bzw. 5 % der Epoxidgruppen des Ausgangsmaterials.

### Beispiel 3: Umsetzung der verbleibenden reaktiven Oxirangruppen im Poreninneren mit Taurin (Aminoethansulfonsäure)

0,2 Gewichtsanteile Aminoethansulfonsäure (Taurin) werden in 10 Gewichtsanteilen bidestilliertem Wasser gelöst und der pH-Wert mit Natronlauge (10 M) auf pH 11 eingestellt und mit 1 Gewichtsanteil des nach Beispiel 2 hergestellten Trägermaterials unter Rühren versetzt. Die Umsetzung erfolgt über 48 Stunden bei 50 °C. Das erhaltene Gel wird abgenutscht, nacheinander zweimal mit je 10 Gewichtsanteilen bidestilliertem Wasser und 4 Gewichtsanteilen Methanol gewaschen und bei 40 - 50 °C im Vakuum getrocknet.

Es wird ein poröses Material erhalten, dessen Außenflächen hydrophil mit Diolgruppen belegt sind, und das in den Poren stark saure Ionenaustauschgruppen aufweist; das so erhaltene poröse Material ist als Kationenaustauscher verwendbar.

### Beispiel 4: Umsetzung der verbleibenden reaktiven Oxirangruppen im Poreninneren mit m-Aminophenylboronsäure

Versuch 3 wird mit m-Aminophenylboronsäure anstelle des Taunns wiederholt.

Es wird ein poröses Material erhalten, dessen Außenflächen hydrophil mit Diolgruppen belegt sind, und das in den Poren Affinitätsliganden aufweist; das so erhaltene poröse Material ist als Affinitätstrager beispielsweise für die Trennung von kohlenhydrathaltigen Verbindungen verwendbar.

## Patentansprüche

1. Poröse Materialien, die hydrophile Außenflächen, sowie Porenflächen, die mit funktionellen Liganden besetzt sind, aufweisen, erhältlich durch folgende Reaktionsschritte:
a) Einführung von Epoxid-Gruppen in einen porösen Basisträger, wobei die Porenflächen und die Außenflächen des Basisträgers modifiziert werden, soweit der Basisträger keine Epoxid-Gruppen aufweist;
b) katalytische Ringöffnung der Epoxid-Gruppen durch Reaktion mit einem Nucleophil unter Anwendung eines partikulären Katalysators in salzfreiem Wasser oder in 10% (v:v) Isopropanol, wobei die Partikelgröße des Katalysators größer als der mittlere Porendurchmesser des porösen Basistragers ist, und so ausgewahlt ist, dass die Verteilungskurve der Partikelgröße des partikulären Katalysators und die Verteilungskurve der Porendurchmesser des porösen Basisträgers sich um weniger als 10 Prozent überlappen,
c) Umsetzung der in Schritt b) verbliebenen Epoxid-Gruppen der Porenflächen und Einführung von Separationseffektoren, wobei Phosphorsäure, Ammoniak, Diethylamin, Trimethylamin, schweflige Säure, Aminoäthansulfonsäure, m-Aminosulfonboronsäure oder auch Komplexbildner wie Iminodiessigsäure, an die genannten Epoxidgruppen addiert werden.

2. Materialien nach Anspruch 1, wobei der poröse Basisträger ein partikuläres Material darstellt.

3. Materialien nach Anspruch 1, wobei der poröse Basisträger eine Membran oder ein Gewebe darstellt.

4. Verwendung eines porösen Materials nach einem der Ansprüche 1 bis 3 zur chromatographischen Trennung mindestens zweier Substanzen.

5. Verfahren zur Herstellung von porösen Materialien nach einem der Ansprüche 1 bis 3 mit folgenden Verfahrensschritten:
a) Einführung von Epoxid-Gruppen, sofern noch nicht im Ausgangsmaterial vorhanden, in den porösen Basisträger.
b) Umsetzung der Epoxid-Gruppen mit einem Nucleophil ausschließlich auf der Außenfläche des porösen Basisträgers in Gegenwart eines eines partikulären Katalysators in salzfreiem Wasser oder in 10 % (v:v) Isopropanol, wobei die Partikelgroße des Katalysators größer als der mittlere Porendurchmesser des porösen Basisträgers ist, und so ausgewählt ist, dass die Verteilungskurve der Partikelgröße des partikulären Katalysators und die Verteilungskurve der Porendurchmesser des porösen Basisträgers sich um weniger als 10 Prozent überlappen.
c) Umsetzung der in Schritt b) verbliebenen Epoxid-Gruppen der Porenflächen und Einführung von Separationseffektoren, wobei Phosphorsäure, Ammoniak, Diethylamin, Trimethylamin, schweflige Säure, Aminoäthansulfonsäure, m-Aminosulfonboronsäure oder auch Komplexbildner wie Iminodiessigsäure, an die genannten Epoxidgruppen addiert werden.

6. Verfahren zur chromatographischen Trennung mindestens zweier Substanzen, **dadurch gekennzeichnet, daß** als Sorbens ein poröses Material nach einem der Ansprüche 1-3 verwendet wird.

## Claims

1. Porous materials having hydrophilic outer surfaces and pore surfaces occupied by functional ligands, obtainable by the following reaction steps:
a) introduction of epoxide groups into a porous base support, where the pore surfaces and the outer surfaces of the base support are modified if the base support contains no epoxide groups;
b) catalytic ring opening of the epoxide groups by reaction with a nucleophile using a particulate catalyst in salt-free water or in 10% (v:v) isopropanol, where the particle size of the catalyst is greater than the average pore diameter of the porous base support, and is selected in such a way that the distribution curve of the particle size of the particulate catalyst and the distribution curve of the pore diameters of the porous base support overlap by less than 10 per cent;
c) reaction of the epoxide groups, remaining in step b), of the pore surfaces and introduction of separation effectors, where phosphoric acid, ammonia, diethylamine, trimethylamine, sulfurous acid, aminoethanesulfonic acid, m-aminosulfoneboronic acid or also complexing agents, such as iminodiacetic acid, are added onto the said epoxide groups.

2. Materials according to Claim 1, where the porous base support is a particulate material.

3. Materials according to Claim 1, where the porous base support is a membrane or a woven fabric.

4. Use of a porous material according to one of Claims 1 to 3 for the chromatographic separation of at least two substances.

5. Process for the production of porous materials according to one of Claims 1 to 3 having the following process steps:
a) introduction of epoxide groups, if not yet present in the starting material, into the porous base support;
b) reaction of the epoxide groups with a nucleophile exclusively on the outer surface of the porous base support in the presence of a particulate catalyst in salt-free water or in 10% (v:v) isopropanol, where the particle size of the catalyst is greater than the average pore diameter of the porous base support, and is selected in such a way that the distribution curve of the particle size of the particulate catalyst and the distribution curve of the pore diameters of the porous base support overlap by less than 10 per cent;
c) reaction of the epoxide groups, remaining in step b), of the pore surfaces and introduction of separation effectors, where phosphoric acid, ammonia, diethylamine, trimethylamine, sulfurous acid, aminoethanesulfonic acid, m-aminosulfoneboronic acid or also complexing agents, such as iminodiacetic acid, are added onto the said epoxide groups.

6. Process for the chromatographic separation of at least two substances, **characterised in that** the sorbent used is a porous material according to one of Claims 1 to 3.

## Revendications

1. Matériaux poreux comportant des surfaces externes hydrophiles et des surfaces de pores occupées par des ligands fonctionnels, pouvant être obtenus au moyen des étapes de réaction qui suivent:
a) introduction de groupes époxyde à l'intérieur d'un support de base poreux, où les surfaces de pores et les surfaces externes du support de base sont modifiées si le support de base ne contient pas de groupes époxyde;
b) ouverture par cycle catalytique des groupes époxyde par réaction avec un nucléophile en utilisant un catalyseur particulaire dans de l'eau exempte de sel ou dans de l'isopropanol à 10% (v:v), où la dimension de particule du catalyseur est supérieure au diamètre de pore moyen du support de base poreux, et est choisie de telle sorte que la courbe de distribution de la dimension de particule du catalyseur particulaire et la courbe de distribution des diamètres de pore du support de base poreux se chevauchent de moins de 10 pour cent; et
c) réaction des groupes époxyde, qui restent au niveau de l'étape b), des surfaces de pores et introduction d'agents de réalisation de séparation, où de l'acide phosphorique, de l'ammoniac, du diéthylamine, du triméthylamine, de l'acide sulfureux, de l'acide aminoéthanesulfonique, de l'acide m-aminosulfoneboronique ou aussi des agents complexants, tels que de l'acide iminodiacétique, sont ajoutés sur lesdits groupes époxyde.

2. Matériaux selon la revendication 1, où le support de base poreux est un matériau particulaire.

3. Matériaux selon la revendication 1, où le support de base poreux est une membrane ou un tissu tissé.

4. Utilisation d'un matériau poreux selon l'une des revendications 1 à 3 pour la séparation chromatographique d'au moins deux substances.

5. Procédé pour la production de matériaux poreux selon l'une des revendications 1 à 3, comportant les étapes de processus qui suivent:
a) introduction de groupes époxyde, s'ils ne sont pas encore présents dans le matériau de départ, à l'intérieur du support de base poreux;
b) réaction des groupes époxyde avec un nucléophile exclusivement sur la surface externe du support de base poreux en présence d'un catalyseur particulaire dans de l'eau exempte de sel ou dans de l'isopropanol à 10% (v:v), où la dimension de particule du catalyseur est supérieure au diamètre de pore moyen du support de base poreux, et est choisie de telle sorte que la courbe de distribution de la dimension de particule du catalyseur particulaire et la courbe de distribution des diamètres de pore du support de base poreux se chevauchent de moins de 10 pour cent; et
c) réaction des groupes époxyde, qui restent au niveau de l'étape b), des surfaces de pores et introduction d'agents de réalisation de séparation, où de l'acide phosphorique, de l'ammoniac, du diéthylamine, du triméthylamine, de l'acide sulfureux, de l'acide aminoéthanesulfonique, de l'acide m-aminosulfoneboronique ou aussi des agents complexants, tels que de l'acide iminodiacétique, sont ajoutés sur lesdits groupes époxyde.

6. Procédé pour la séparation chromatographique d'au moins deux substances, **caractérisé en ce que** le sorbant utilisé est un matériau poreux selon l'une des revendications 1 à 3.
